(19) Europäisches Patentamt
European Patent Office
Office européen des brevets

(11) **EP 4 489 399 A2**

# (12) DEMANDE DE BREVET EUROPEEN

(43) Date de publication:
**08.01.2025 Bulletin 2025/02**

(21) Numéro de dépôt: **24214764.3**

(22) Date de dépôt: **25.07.2018**

(51) Classification Internationale des Brevets (IPC):
***H04N 19/463*** *(2014.01)*

(52) Classification Coopérative des Brevets (CPC):
**H04N 19/176; G06F 17/14; H04N 19/12; H04N 19/463**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2017 FR 1758789**

(62) Numéro(s) de document de la (des) demande(s) initiale(s) en application de l'article 76 CBE:
**18755720.2 / 3 685 283**

(71) Demandeur: **FONDATION B-COM**
**35510 Cesson-Sévigné (FR)**

(72) Inventeurs:
• **LORCY, Victorien**
**35000 RENNES (FR)**
• **PHILIPPE, Pierrick**
**35520 MELESSE (FR)**

(74) Mandataire: **Jacobacci Coralis Harle**
**32, rue de l'Arcade**
**75008 Paris (FR)**

Remarques:
Cette demande a été déposée le 22-11-2024 comme demande divisionnaire de la demande mentionnée sous le code INID 62.

## (54) PROCEDES DE CODAGE ET DE DECODAGE D'UNE IMAGE

(57) L'invention concerne un procédé de décodage d'au moins une image numérique, à partir de données codées par un encodeur et représentatives de ladite image, ladite image étant divisée en une pluralité de blocs traités dans un ordre défini, ledit procédé comprenant les étapes suivantes, mises en oeuvre pour un bloc, dit bloc courant, comprenant un nombre prédéterminé (Mv) de lignes et un nombre prédéterminé (Mh) de colonnes :
- Décodage (D1) des coefficients du bloc courant à partir de données codées ;
- Décodage d'un index représentatif d'un identifiant d'une transformée parmi une pluralité de transformées et identification (D4) de la transformée, une transformée s'exprimant sous la forme d'une sous-transformée verticale de taille Mv*Mv et d'une sous- transformée horizontale de taille Mh*Mh ;
- Transformation (D5) du bloc courant en un bloc décodé transformé, à partir de la transformée obtenue, par application successive de la sous-transformée verticale puis de la sous-transformée horizontale ou respectivement de la sous-transformée horizontale puis de la sous-transformée verticale ;
- Reconstruction (D7) de l'image à partir du bloc décodé transformé.

Selon l'invention, l'étape de transformation comprend, pour l'application d'au moins une sous-transformée de la transformée sélectionnée :
- la lecture dans une mémoire des coefficients d'au moins une sous-transformée distincte, dite transformée noyau, appartenant à la pluralité de transformées, et
- l'utilisation modifiée des coefficients lus, leurs valeurs absolues étant conservées.

FIG. 15

**Description**

**1. Domaine de l'invention**

Le domaine de l'invention est celui de la compression de signal, en particulier d'une image numérique ou d'une séquence d'images numériques, divisée en blocs de pixels.

L'invention concerne plus particulièrement la transformation d'un bloc de pixels, issu ou non d'une prédiction. Elle trouve notamment son application dans un contexte de compétition de transformées.

Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc.

La présente invention s'applique de manière similaire au codage/décodage d'images de type 2D ou 3D.

L'invention peut notamment, mais non exclusivement, s'appliquer au codage vidéo mis en oeuvre dans les codeurs vidéo actuels AVC (pour « Advanced Video Coding », en anglais) et HEVC (pour « High Efficiency Video Coding », en anglais) et leurs extensions futures (MVC, 3D-AVC, MV-HEVC, 3D-HEVC, post-HEVC, etc), et au décodage correspondant.

**2. Présentation de l'art antérieur**

La compression de séquences d'images et de vidéo fait appel à des transformations. Celles- ci sont généralement appliquées sur un signal résiduel, différence entre les pixels de l'image et la prédiction qui en est faite pour un bloc donné.

Les transformations peuvent être implémentées sous forme de matrices de coefficients, à l'aide d'algorithmes rapides. Dans les deux cas elles nécessitent de stocker les coefficients de transformées.

Le nombre de coefficients est d'autant plus grand que les transformations sont grandes.

Le nombre de coefficients est également démultiplié dans le cas où le codeur/décodeur font appel à plusieurs transformées, dans un contexte de compétition de transformées, par exemple décrit dans la publication de A. Arrufat et al., intitulée « Rate-distortion optimised transform compétition for intra coding in HEVC », publiée dans les Proceedings de la conférence IEEE Visual Communication on Image Processing, en décembre 2014, qui s'est tenue à La Valette, Malta. pp.73. La meilleure transformée pour le bloc courant est sélectionnée parmi plusieurs transformées disponibles à l'encodage, selon un critère d'optimisation débit-distorsion. Par exemple, il est proposé 5 transformées pour les blocs de taille 4x4 et 17 transformées pour les blocs de taille 8x8.

Pour diminuer la quantité de coefficients à stocker, il est connu de recourir à des transformées trigonométriques, dont le nombre de coefficients est limité. Cependant, le choix est restreint, car il n'y a que 16 transformées trigonométriques de type DCT/DST.

Par ailleurs le fait de se restreindre à ces transformées limite la performance du codage car ces transformées ne sont pas toujours adaptées aux signaux codés.

Si on utilise des transformées non trigonométriques, la quantité de coefficients à stocker est plus importante et croît linéairement avec le nombre de transformées.

Par exemple, une transformation de taille 8x8 requiert l'application successive d'une sous- transformée horizontale et d'une transformée verticale, ce qui nécessite 2x64 coefficients= 128. Si 17 transformées sont stockées conformément à la publication de Arrufat, (17*128= 2176 coefficients sont à stocker.

**3. Inconvénients de l'art antérieur**

La compétition de transformées permet d'améliorer les performances de compression, mais au prix d'un besoin accru en ressources de stockage.

**4. Objectifs de l'invention**

L'invention vient améliorer la situation.

L'invention a notamment pour objectif de pallier ces inconvénients de l'art antérieur.

Plus précisément, un objectif de l'invention est de proposer une solution qui permette une utilisation d'un nombre important de transformées distinctes, tout en réduisant la quantité de ressources de stockage requise.

## 5. **Exposé de l'invention**

Ces objectifs, ainsi que d'autres qui apparaîtront par la suite, sont atteints à l'aide d'un procédé de décodage d'au moins une image numérique, à partir de données codées et représentatives de ladite image, ladite image étant divisée en une pluralité de blocs traités dans un ordre défini, ledit procédé comprenant les étapes suivantes, mises en oeuvre pour un bloc, dit bloc courant, comprenant un nombre prédéterminé (Mv) de lignes et un nombre prédéterminé (Mh) de colonnes :

- Décodage des coefficients du bloc courant à partir de données codées ;
- Décodage d'un index représentatif d'un identifiant d'une transformée parmi une pluralité de transformées et identification de la transformée, une transformée s'exprimant sous la forme d'une sous-transformée verticale de taille Mv*Mv et d'une sous-transformée horizontale de taille Mh*Mh ;
- Transformation du bloc courant en un bloc décodé transformé, à partir de la transformée obtenue, par application successive de la sous-transformée verticale puis de la sous-transformée horizontale ou respectivement de la sous-transformée horizontale puis de la sous-transformée verticale ;
- Reconstruction de l'image à partir du bloc décodé transformé ;

Selon l'invention, l'étape de transformation comprend, pour l'application d'au moins une sous- transformée de la transformée sélectionnée :

- la lecture dans une mémoire des coefficients d'au moins une sous-transformée distincte, dite transformée noyau, appartenant à la pluralité de transformées, la au moins une transformée noyau comprenant un nombre de lignes (Mh', M'v) de coefficients non nuls inférieur au nombre de lignes et/ou au nombre de colonnes du bloc courant, et
- l'utilisation modifiée des coefficients lus, leurs valeurs absolues étant conservées, les coefficients lus étant appliqués aux Mh', respectivement Mv', premières lignes du bloc, les Mh-M'h lignes respectivement colonnes suivantes du bloc transformé étant nulles par construction.

Corrélativement, l'invention concerne aussi un procédé de codage d'au moins une image numérique, ladite image étant divisée en une pluralité de blocs de pixels traités dans un ordre défini, ledit procédé comprenant les étapes suivantes, mises en oeuvre pour un bloc courant, comprenant un nombre prédéterminé (Mv) de lignes et un nombre prédéterminé (Mh) de colonnes :

- Sélection d'une transformée parmi une pluralité de transformées, une transformée s'exprimant sous la forme d'une sous-transformée verticale de taille Mv*Mv et d'une sous-transformée horizontale de taille Mh*Mh ;
- Transformation du bloc courant en un bloc transformé, par la transformée sélectionnée ;
- Encodage du bloc transformé destiné à produire des données codées représentatives du bloc transformé ;
- Insertion des données codées dans un train binaire représentatif de l'image codée ;

Selon l'invention, l'étape de transformation comprend, pour l'application d'au moins une sous- transformée de la transformée sélectionnée :

- la lecture dans une mémoire des coefficients d'au moins une sous-transformée distincte, dite transformée noyau, appartenant à la pluralité de transformées, la au moins une transformée noyau comprenant un nombre de lignes (Mh', M'v) de coefficients non nuls inférieur au nombre de lignes et/ou au nombre de colonnes du bloc courant, et
- l'utilisation modifiée des coefficients lus, leurs valeurs absolues étant conservées les coefficients lus étant appliqués aux Mh', respectivement Mv', premières lignes du bloc, les Mh-M'h lignes respectivement colonnes suivantes du bloc transformé étant nulles par construction.

Le principe de l'invention consiste à réaliser au moins deux sous-transformations distinctes à partir des coefficients d'une seule sous-transformée noyau. L'invention propose ainsi de réaliser un système de transformées à partir de sous-transformées séparables construites à partir d'une ou plusieurs transformations noyaux. De la sorte, le nombre de coefficients de transformées à stocker en mémoire est réduit.

Ce principe est applicable aussi bien au codeur qu'au décodeur.

Les modes de réalisations qui vont maintenant être présentés s'appliquent aussi bien au procédé de codage qu'au procédé de décodage.

Selon un aspect de l'invention, la au moins une sous-transformée noyau comprend un nombre de lignes Mh', M'v de coefficients non nuls inférieur au nombre de lignes Mh et/ou au nombre de colonnes Mv du bloc courant et les coefficients lus sont utilisés pour les Mh premières lignes respectivement les Mv premières colonnes du bloc.

Cela revient à appliquer des coefficients nuls aux (M-M') lignes suivantes du bloc.

On exploite le fait que les composantes basses fréquences sont celles qui portent le plus d'informations et sont les plus utiles en codage vidéo pour réduire le nombre de coefficients stockés.

Selon un autre aspect de l'invention, l'utilisation modifiée des coefficients de la sous-transformée noyau comprend un renversement des lignes de la sous-transformée noyau.

Cette construction de sous transformée, aux motifs horizontaux, respectivement verticaux, inversés par rapport à la représentation offerte par le noyau permet, sans stockage de coefficients supplémentaires, de mieux représenter certains blocs résiduels.

Par exemple, un vecteur ligne de la sous-transformée noyau comprenant des coefficients décroissants est transformée en un vecteur ligne croissant capable de considérer un gradient croissant dans le bloc à encoder. Les performances de codage sont donc améliorées pour ce type de bloc.

Selon un autre aspect de l'invention, l'utilisation modifiée des coefficients de la sous-transformée noyau comprend au moins une permutation de deux coefficients et au moins un changement de signe d'un coefficient.

Cette construction de sous-transformée permet, sans stockage de coefficients supplémentaires, de mieux représenter des blocs résiduels aux motifs horizontaux, respectivement verticaux, avec des motifs décalés spatialement par rapport à la représentation offerte par le noyau.

Par exemple, un vecteur ligne du noyau comprenant des coefficients aptes à représenter un contour à une position donnée permettra, à la sous transformée construite, par échange de position, de traiter précisément des contours à une autre position. Les performances de codage sont donc améliorées pour ce type de bloc.

L'invention permet donc de réaliser des transformations variées à partir d'un même noyau pour mieux s'adapter à différents types de blocs, sans augmenter la quantité de coefficients à stocker.

Selon encore un autre aspect de l'invention, le nombre de lignes du bloc courant étant égal au nombre de colonnes Mh=Mv, la pluralité de transformées comprend :

- une première sous transformée verticale Av0 = A de taille Mv*Mv(=Mh*Mh) qui utilise à l'identique les coefficients d'une première sous-transformée noyau K ;
- une deuxième sous-transformée verticale Av1 = D qui utilise les coefficients de la première sous-transformée noyau K avec renversement de ses lignes ;
- une première sous transformée horizontale Ah0 de taille Mh*Mh(=Mv*Mv) qui utilise à l'identique les coefficients de la première sous-transformée noyau K ;
- une deuxième sous-transformée horizontale Ah1 = D qui utilise les coefficients de la première sous-transformée noyau avec renversement de ses lignes.

Avantageusement on réalise ainsi un système comprenant les 4 transformées suivantes :

$$T0 = Av0xAh0 = AxA$$

$$T1 = Av0xAh1 = AxD$$

$$T2 = Av1xAh0 = DxA$$

$$T3 = Av1xAh1 = DxD$$

Ce système ne nécessite le stockage que de la sous-transformée A, ce qui représente $Mh^2$ coefficients, alors que l'art antérieur en a besoin de $8*Mh^2$.

Si, en outre, la transformée noyau ne comprend que Mh' < Mh lignes de coefficients non nuls, on n'a besoin que de stocker $M'^2$ coefficients.

Selon un autre mode de réalisation de l'invention, la pluralité de transformées comprend :

- une première sous transformée verticale Av0 = A de taille Mv*Mv qui utilise à l'identique les coefficients d'une première sous-transformée noyau K de taille Mv'xMv avec Mv' inférieur à Mv ;
- une deuxième sous-transformée verticale Av1 = C qui utilise les coefficients de la première sous-transformée noyau K avec renversement de ses lignes ;

- une première sous transformée horizontale Ah0 = B de taille Mh*Mh qui utilise à l'identique les coefficients d'une deuxième sous-transformée noyau K' de taille Mh'xMh avec Mh' inférieur à Mh ;
- une deuxième sous-transformée horizontale Ah1 = D qui utilise les coefficients de la deuxième sous-transformée noyau K avec renversement de ses lignes.

Avantageusement, on réalise un système comprenant les 4 transformées suivantes :

$$T0 = Av0xAh0 = AxB$$

$$T1 = Av0xAh1 = AxD$$

$$T2 = Av1xAh0 = CxB$$

$$T3 = Av1xAh1 = CxD$$

Le fait d'utiliser deux noyaux permet de s'adapter au cas où le bloc n'est pas carré. Cela permet aussi s'adapter à des propriétés statistiques distinctes entre lignes et colonnes.

L'invention concerne également un dispositif adapté pour mettre en oeuvre le procédé de décodage selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé de décodage, et ne sont pas détaillés plus amplement.

Selon un mode particulier de réalisation de l'invention, un tel dispositif est compris dans un équipement terminal.

L'invention concerne également un dispositif adapté pour mettre en oeuvre le procédé de codage selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé de codage, et ne sont pas détaillés plus amplement.

Selon un mode particulier de réalisation de l'invention, un tel dispositif est compris dans un équipement terminal.

L'invention concerne aussi un équipement terminal d'utilisateur comprenant un dispositif de décodage d'au moins une image et/ou un dispositif de codage d'au moins une image selon l'invention.

L'invention concerne aussi un programme d'ordinateur comportant des instructions pour la mise en oeuvre des étapes d'un procédé de codage d'au moins une image tel que décrit précédemment, lorsque ce programme est exécuté par un processeur.

L'invention concerne aussi un programme d'ordinateur comportant des instructions pour la mise en oeuvre des étapes d'un procédé de décodage d'au moins une image tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de codage respectivement de décodage d'au moins une image selon l'invention, éventuellement amovible, mémorisant un programme d'ordinateur mettant en oeuvre un procédé de codage respectivement de décodage, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** illustre de façon schématique un bloc x rectangulaire à traiter ;
- les figures **2A** et **2B** illustrent de façon schématique les matrices d'une sous-transformée verticale et d'une sous-transformée horizontale applicables au bloc x ;
- la figure **3** illustre de façon schématique la transformation d'une ligne du bloc x par la sous-transformée horizontale Ah ;

- la figure **4** illustre de façon schématique une sous-transformée horizontale A formée à partir d'une sous-transformée noyau K comprenant un nombre inférieur de lignes ;
- la figure **5** présente un exemple de sous-transformée horizontale A et un exemple de sous-transformée horizontale D déduite de la sous-transformée A selon l'invention ;
- la figure **6** illustre de façon schématique la transformation d'une ligne du bloc x par une sous-transformée horizontale formée à partir d'un noyau comprenant un nombre inférieur de lignes ;
- la figure **7** présente un exemple numérique de sous-transformée horizontale A ;
- la figure **8** présente un exemple numérique de sous-transformée horizontale D déduite de A par une opération de permutation des coefficients au signe près selon l'invention ;
- la figure **9** présente un exemple numérique de noyau K comprenant un nombre M' de lignes inférieur au nombre de lignes du bloc courant ;
- la figure **10** présente un exemple numérique de noyau f(K) déduit de K par une opération de sous-échantillonnage à partir du noyau K selon l'invention ;
- la figure **11** présente un exemple numérique de noyau déduit de K par un opérateur de renversement des lignes appliqué sur chacune des lignes du noyau K ;
- la figure **12** présente un exemple numérique de noyau déduit de K par un opérateur de renversement des lignes avec échange de signes effectué sur chacune des lignes du noyau K ;
- la figure **13** compare les courbes de performances d'un dispositif de codage à compétition de transformées selon l'invention et selon l'art antérieur ;
- la figure **14** décrit les étapes d'un procédé de codage d'une image selon un mode de réalisation de l'invention ;
- la figure **15** décrit les étapes d'un procédé de décodage d'une image selon l'invention ;
- la figure **16** illustre de façon schématique un exemple de structure matérielle d'un dispositif de codage l'invention ; et
- la figure **17** illustre de façon schématique un exemple de structure matérielle d'un dispositif de décodage l'invention.

## 7. Description d'un mode de réalisation particulier de l'invention

Le principe général de l'invention repose sur le stockage en mémoire des coefficients d'une sous-transformée noyau et sur l'utilisation des coefficients de ce noyau pour appliquer au moins deux sous-transformées distinctes à un bloc à coder ou décoder.

L'invention s'applique aussi bien au codage qu'au décodage d'une séquence d'images dans un contexte de compétition de transformées.

Dans la suite de la description, on considère une pluralité de transformées $T_1$ à $T_N$, mises en compétition.

On considère que chaque transformation $T_n$ est composée de deux sous-transformations, verticale et horizontale, nommées $A_{v,n}$ et $A_{h,n}$ avec n entier compris entre 0 et N-1. $A_{v,n}$ agit sur les colonnes et $A_{h,n}$ sur les lignes d'un blocs à transformer x.

Dans la suite de la description, on considère de façon classique que le bloc x est un bloc résiduel, issu de la différence entre le bloc courant et sa prédiction, mais l'invention n'est pas limitée à ce cas particulier et concerne tout type de bloc.

On désigne par $X_n$ le bloc transformé résultant de la transformation par $T_n$.

$X_n$ s'exprime comme suit :

$$X_n = A_{v,n} * (A_{h,n} * x^t)^t \qquad\qquad (1)$$

Où $()^t$ est l'opérateur de transposition matricielle, $*$ est le signe de multiplication de matrices.

Pour chaque transformée $T_n$, l'ordre d'invocation des sous-transformées peut être inversé, par exemple :

$$X_n = (A_{h,n} * (A_{v,n} * x)^t)^t \qquad\qquad (2)$$

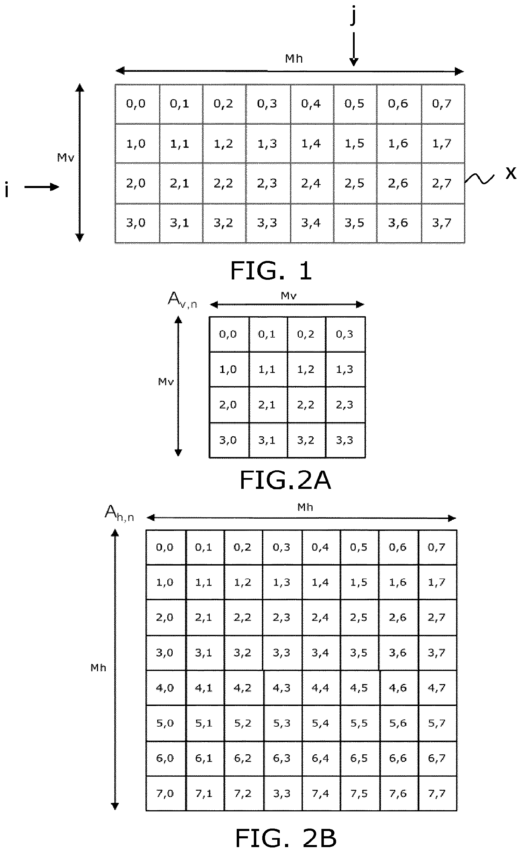

La sous-transformée verticale $A_{v,n}$ peut être représentée sous la forme d'une matrice de taille $M_v$ lignes et $M_v$ colonnes, telle qu'illustrée par la Figure **2A**.

La sous-transformée horizontale $A_{h,n}$ peut être représentée sous une forme d'une matrice de taille $M_h$ lignes et $M_h$ colonnes, telle qu'illustrée par la Figure **2B**.

Par exemple le résultat de l'application de la sous-transformée horizontale $A_{h,n}$ sur une ligne I (composée de pixels $I_0, ..., I_{Mh-1}$) de taille Mv du bloc résiduel x peut être exprimé sous la forme du produit matriciel suivant :

$$L_n^t = (A_{h,n} * I^t) \qquad\qquad (3)$$

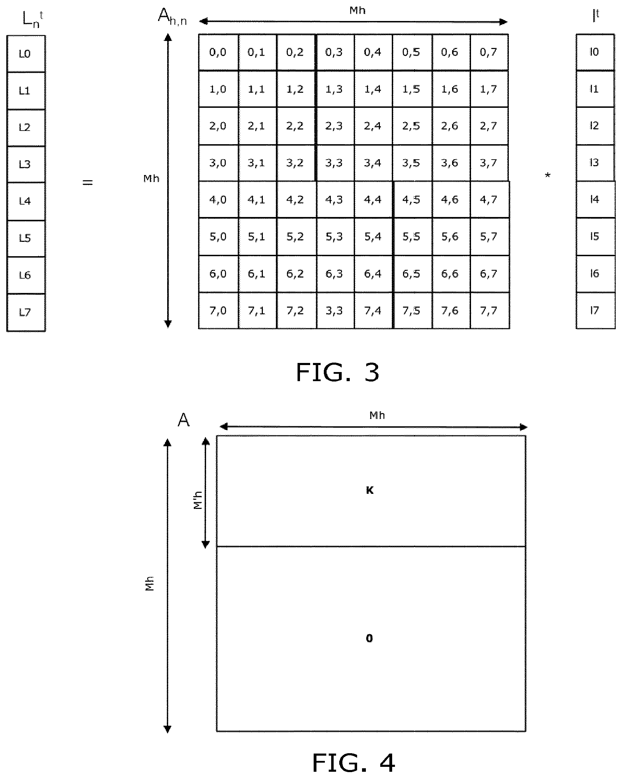

On obtient une ligne transformée L, comme illustré par la Figure **3**.

Chaque sous-transformée peut également être implémentée sous forme d'un opérateur linéaire de façon équivalente, ou chaque valeur k (k=0,...$M_{v-1}$) du vecteur $L_n$ résultant est calculée sous la forme suivante :

$$L_{n,k} = a_{h,n,k,0} * I_0 + a_{h,n,k,1} * I_1 + a_{h,n,k,2} * I_2 + \ldots + a_{h,n,k,Mh-1} * I_{Mh-1} \qquad (4)$$

Si l'implémentation est réalisée en virgule fixe, des opérateurs de shift et de troncation sont ajoutés pour limiter la dynamique de sortie.

Par exemple, l'expression précédente prend alors la forme :

$$L_{n,k} = (a_{h,n,k,0} * I_0 + a_{h,n,k,1} * I_1 + a_{h,n,k,2} * I_2 + \ldots + a_{h,n,k,Mh-1} * I_{Mh-1} + \text{offset}) >> \text{Nbit} \qquad (5)$$

Dans ce cas, le terme offset représente une valeur entière, par exemple offset=$2^{Nbit-1}$, Nbit est lié à la précision binaire souhaitée.

Selon l'invention, on considère au moins une sous-transformée K, dite noyau, dont on stocke en mémoire les coefficients et on utilise les coefficients de ce noyau pour réaliser au moins deux sous- transformées distinctes, sans nécessité de stocker en mémoire des coefficients supplémentaires.

Il en résulte que selon l'invention, pour appliquer la sous-transformée Ah,n ou Av,n, il est nécessaire de lire les coefficients de la sous-transformée noyau en mémoire et de les utiliser directement pour calculer le résultat de la transformation du bloc par la sous-transformée Ah,n ou Av,n.

Selon l'invention cette utilisation peut comprendre une modification de la position et/ou du signe d'au moins un coefficient de la sous-transformée noyau, sans changement de sa valeur absolue.

On comprend qu'il n'est pas nécessaire de passer par une étape de stockage des coefficients de la sous-transformée déduite du noyau pour l'appliquer au bloc courant.

Dans le cas où le bloc x est rectangulaire avec Mh différent de Mv, on peut considérer une sous-transformée noyau verticale Kv et une sous-transformée noyau horizontale Kh distinctes. Avantageusement, Kh peut être déduite de Kv ou l'inverse.

On peut donc déduire plusieurs sous-transformées distinctes à partir de la sous-transformée noyau, tant que cette déduction ne nécessite pas la lecture de coefficients supplémentaires en mémoire, ni de transformation de la valeur absolue des coefficients du noyau par calcul.

Par exemple, on déduit simplement une première sous-transformée A du noyau K en appliquant tous les coefficients de K aux mêmes éléments du bloc. A ou une partie de A est identique au noyau K, selon les dimensions de K par rapport à la sous-transformée A.

Selon une première option, K et A ont les mêmes dimensions. On a donc A = K.

Selon une deuxième option, K comprend un nombre de lignes M'inférieur au nombre de lignes M de A. On réalise alors la transformation par A en appliquant les coefficients des M' premières lignes de K au bloc. Cela revient à construire la sous-transformée illustrée par la Figure 4 pour la sous-transformée horizontale Ah,n.

On déduit en outre une deuxième sous-transformée D de A, par permutation ou changement de position des coefficients de A. Selon l'invention, D s'écrit sous la forme D=f(A), avec f opérateur de modification. D dépend uniquement de A et s'écrit sous la forme d'une permutation des valeurs de la matrice A. Ses coefficients sont donc utilisés sans modification, mais à des éléments différents du bloc, c'est-à-dire positionnés différemment.

Un opérateur f selon l'invention peut appartenir au groupe comprenant :

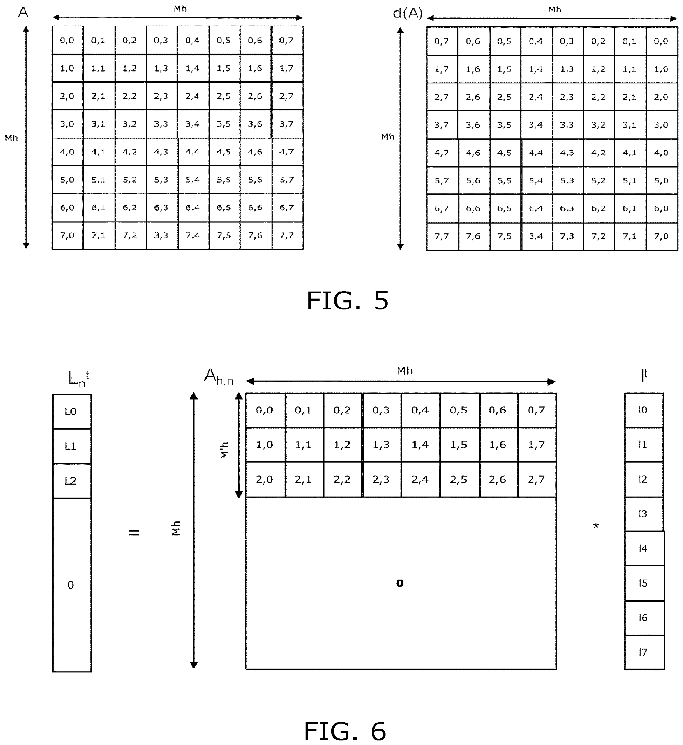

1. Une inversion des positions des coefficients de chacune des lignes, comme présenté ci-dessous les indices de la matrice d(A) sont inversés sur chacune des lignes par rapport à la matrice A. En relation avec la Figure 5, on voit que le second indice est inversé suivant la ligne ;
2. Un changement de signe sur les lignes ;
3. Une combinaison des 2 premiers points, qu'on appelle « permutation au signe près ».

En permettant d'appliquer plusieurs sous-transformations distinctes à partir d'un même noyau, l'invention économise de l'espace mémoire.

En effet, considérons le cas d'une transformée T composée d'une sous-transformée horizontale de dimensions Mh*Mh et d'une sous-transformée verticale de dimensions Mv*Mv. Son utilisation nécessite le stockage de Mh*Mh + Mv*Mv coefficients.

Par exemple, dans le cas d'une compétition avec N=3 transformées et pour des blocs de taille 8x4, un codeur ou un décodeur selon l'art antérieur a besoin de stocker 3*(64+16) = 240 coefficients.

Avec l'invention, un noyau K permet de déduire au moins une sous-transformée Ah et une sous- transformée Dh = f(Ah) d'un même noyau K. Supposons que ce noyau K soit de taille Mh*Mh. On économise alors le stockage d'au moins 64 coefficients.

On considère maintenant la variante selon laquelle le noyau est de taille Mh'*Mh avec Mh'<Mh.

La sous-transformation Ah présente, sous sa forme matricielle, un ensemble de lignes (Mh-Mh'≥1) ne contenant que des zéros. Dans ce cas, $M_h-M'_h$ lignes de $A_h$ sont nulles et $M'_h$ lignes ne sont pas nulles.

Dans ce cas, les vecteurs transformés présenteront des composantes à zéro, aux positions où des lignes de matrices de sous-transformées sont à zéro, comme illustré par la Figure 6.

Le noyau K de la transformation ne requiert le stockage que de Mh*M'h coefficients.

En outre, seuls M'h coefficients de Ln seront calculées, les Mh-M'h suivants sont nuls. L'application de la sous-transformée Ah se restreint donc au calcul de M'h coefficients fréquentiels, les Mh-M'h autres étant nuls par construction.

On économise en plus des ressources de calcul.

L'inventeur a remarqué que l'utilisation d'une sous-transformée Ah limitée à un noyau K n'impacte pas significativement les performances de codage : cela est dû aux phénomènes suivants :

- Les coefficients les plus porteurs d'information en codage vidéo sont les coefficients dits de basses fréquences, c'est-à-dire correspondant à ceux issus des premières lignes des sous-transformations.
- Les coefficients portent les détails qui sont inutiles en codage à bas débit car souvent supprimé lors de la quantification, car ils sont négligeables par rapport aux premiers coefficients issus du calcul de la sous-transformée à partir de ses premières lignes.
- La compétition de transformées, et l'utilisation en appoint de la transformation To qui ne présente pas de lignes nulles, permet de limiter l'éventuelle perte engendrée par la restriction de Ah à un noyau réduit.

On décrit maintenant en détails plusieurs modes de réalisation de l'invention.

1 - premier mode de réalisation de l'invention

Dans cet exemple, on réalise un système de compétition de transformées à partir de trois transformées T0, T1, T2.

On traite des blocs rectangulaires de dimensions Mh*Mv avec $M_h$=8 et $M_v$=4.

- La transformée $T_0$ est composée d'une sous-transformée horizontale DCT de type 2 et d'une sous-transformée verticale DCT de type 2 (de tailles respectives 8x8 et 4x4).
- la transformée $T_1$ est composée d'une sous-transformée horizontale $A_{h,1}$=A et d'une sous-transformée verticale $A_{v,1}$=$B_1$.
- la transformation $T_2$ est composée d'une sous-transformation $A_{h,2}$=D = f(A) et d'une seconde sous-transformation $A_{v,2}$=$B_2$.

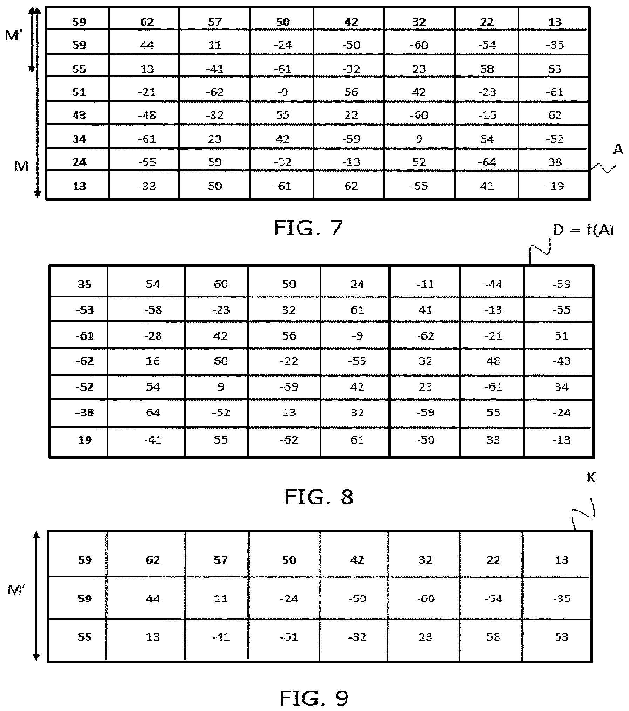

Un exemple de sous-transformée noyau A est présenté en relation avec la Figure 7.

Il s'agit d'une matrice préférablement orthogonale c'est-à-dire qu'elle permet de reconstruire à un facteur près, avec une erreur faible, les pixels, si on effectue la transformation d'un bloc suivie de la transformation inverse, qui est alors sa transposée.

Selon l'invention, la sous-transformée D s'écrit sous la forme D=f(A), où f est un des opérateurs décrits précédemment.

En relation avec la figure 8, on présente un exemple de sous-transformée D obtenue à partir des coefficients de la transformée A à l'aide de l'opérateur de type « permutation au signe près ».

Ainsi D =f(A) s'écrit dans cette réalisation, chacune des lignes de A a été permutée (permutation Dk,n=Ak,Mh-1-n pour chaque ligne k=0,...,Mh-1 et colonne n=0,...,Mh-1) le signe des coefficients certaines lignes a été inversé : Dans cet exemple, seules les 3 sous-transformées distinctes A, B1 et B2 sont stockées en mémoire, en plus des sous-transformées de type DCT2. Comme précédemment décrit, la transformée peut être appliquée directement en lisant les coefficients stockés pour A et en les appliquant aux éléments du bloc à traiter, conformément à l'opérateur f, sans nécessiter de stocker ses propres coefficients.

En termes de mémoire, comme vu auparavant, l'art antérieur impose dans cette configuration le stockage de 3x (64+ 16) = 240 coefficients pour T0, T1 et T2.

Avec l'invention, on a :

- 64+16 coefficients pour la transformée T0
- 64+16 coefficients pour la transformée T1
- 0+16 coefficients seulement car la sous transformée $A_{h,2}$ utilise les coefficients de $A_{h,1}$ sans modifications d'amplitude.

Au total on a donc 176 coefficients à stocker.

Selon une variante, la sous-transformée A est obtenue à partir d'un noyau K de dimensions Mh'xMh avec Mh'<Mh, comme illustré par la Figure 9. La sous-transformée A peut donc s'exprimer à partir de la matrice K du noyau de dimensions MhxM'h et d'une matrice nulle 0 de taille Mhx(Mh-M'h) qui ne contient que des zéros.

Dans l'exemple particulier du premier mode de réalisation, on considère un noyau K comprenant Mh' = 3 lignes. Les Mh' lignes de K correspondent au Mh' premières lignes de la matrice de la figure 7. Par conséquent, Ah,1 = A ne nécessite que le stockage de 3x8 = 24 coefficients.

Selon cette variante de réalisation, le stockage des coefficients requiert :

- T0 64+16 coefficients
- T1 24+16 coefficients, elle s'appuie sur Ah qui présente des lignes nulles
- T2 0+16 coefficients seulement car la sous transformation $A_{h,2}$ utilise les coefficients de $A_{h,1}$ sans modifications.

Au total on a donc 136 coefficients à stocker.

Ainsi, sans perte significative de qualité, on a réduit le montant de stockage nécessaire aux coefficients de 240 à 136.

Ceci présente un avantage significatif même si le nombre de coefficients total à stocker pourrait sembler faible. En effet dans une réalisation matérielle d'un codeur/décodeur basée processeur, l'étape de transformation est très sollicitée, car tous les pixels codés sont transformés au décodeur par exemple. Les coefficients des transformations doivent être rapidement accessibles, ce qui impose l'usage de mémoires cache rapides mais coûteuses en termes d'investissement financier.

2- Deuxième mode de réalisation de l'invention

Dans un deuxième mode de réalisation de l'invention, on traite des blocs résiduels rectangulaires de 8x4 pixels, mais on porte à 5 le nombre de transformées :

- La transformée $T_0$ est composée d'une DCT de type 2 pour les lignes et les colonnes (de tailles respectives 8x8 et 4x4).
- La transformée $T_1$ est composée d'une sous-transformée horizontale $A_{h,1}$=A et d'une sous-transformée verticale $A_{v,1}$=B.
- La transformée $T_2$ est composée d'une sous-transformée horizontale $A_{h,2}$=f(A), avec f un premier opérateur, et d'une sous-transformée verticale $A_{v,2}$=B.
- La transformée $T_3$ est composée d'une sous-transformée horizontale $A_{h,3}$=A et d'une sous-transformée verticale $A_{v,3}$=g(B), avec g un deuxième opérateur.
- La transformée $T_4$ est composée d'une sous-transformée horizontale $A_{h,4}$=f(A) et d'une sous-transformée verticale $A_{v,4}$=g(B).

Comme dans le premier mode de réalisation f() et g() sont par exemple des opérateurs de permutation au signe près opérant ligne par ligne.

Dans ce cas, le stockage nécessaire à la transformation d'un bloc résiduel est le suivant :

- 64+16 coefficients pour la transformée T0 ;
- 64+16 coefficients pour la transformée T1 ;
- 0+0 coefficients pour la transformée T2, les deux sous-transformées Av,2 et Ah, 2 se déduisent de Av, 1 et Ah, 1 ;
- 0+0 coefficients pour la transformée T3, les deux sous-transformées Av,3 et Ah,3 se déduisant de Av, 1 et Ah, 1 ;
- 0+0 coefficients pour la transformée T4, les deux sous-transformées Av,4 et Ah,4 se déduisant de Av, 1 et Ah, 1 ;

Ce qui représente un total de 160 coefficients à stocker, contre 5*(64+16) = 400 coefficients pour un stockage exhaustif selon l'art antérieur.

Selon une variante, la sous-transformée Ah,1 est restreinte au noyau K1 utilisé dans le premier mode de réalisation, si bien que le nombre de coefficients à stocker devient :

- 64+16 coefficients pour la transformée T0 ;

- 24+16 coefficients pour la transformée T1 ;
- 0 coefficients pour les transformées T2 à T5

Le total de coefficients à stocker atteint 120, ce qui est notoirement plus faible que l'art antérieur.

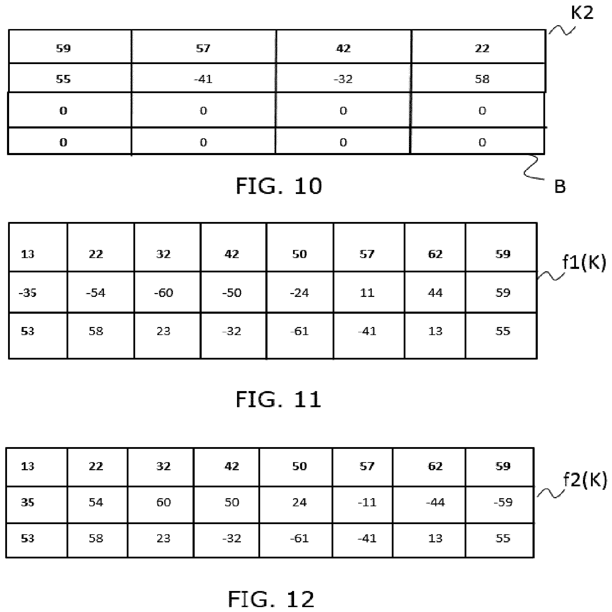

On notera que la sous-transformée B de dimensions Mv*Mv peut également se présenter sous la forme d'un noyau K2 de dimensions inférieures à celles de B. Dans une réalisation particulière, B s'écrit sous la forme illustrée par la Figure 10. Il comprend Mv' lignes non nulles, avec Mv' = 2.

Par exemple, le noyau K2 est constitué des deux premières lignes, qui sont prélevés du noyau K de A. Ce prélèvement est réalisé par sous-échantillonnage de K (une colonne sur 2 est prélevée en partant de la première et une ligne sur deux en commençant par la première ligne).

Dans ce mode le nombre de coefficients à mémoriser devient :

- TO 64+16 coefficients
- T1 24+0 coefficients, car les coefficients de B sont contenus dans A.
- et reste nul pour T2 à T5 comme pour le cas précédent.

Ce qui au total revient à un total de 104 coefficients à stocker, ce qui est notoirement plus faible que l'art antérieur.

3- Troisième mode de réalisation de l'invention

Dans ce mode, les transformées se composent de la façon suivante :

- La transformée $T_0$ est composée d'une DCT de type 2 pour les lignes et les colonnes (de tailles respectives 8x8 et 4x4) ;
- La transformée $T_1$ est composée d'une sous-transformée $A_{h,1}$ =A et d'une seconde sous-transformée $A_{v,1}$ = B.
- La transformée $T_2$ est composée d'une sous-transformée $A_{h,2}$=$f_1$(A) et d'une seconde sous-transformée $A_{v,2}$=B.
- La transformée $T_3$ est composée d'une sous-transformée $A_{h,3}$=$f_2$(A) et d'une seconde sous-transformée $A_{v,3}$=B.

A est construite à partir du noyau K comprenant par exemple Mh= 8 colonnes et Mh' = 3 lignes comme illustré par la Figure 9 (déjà décrite).

f1() est un opérateur de renversement des coefficients effectué sur chacune des lignes du noyau K. Le résultat f1(K) obtenu se présente sous la forme illustrée par la Figure 11.

f2() est un opérateur de retournement avec échange de signe de certaines des lignes du noyau K. Dans cet exemple, il est réalisé sur la deuxième ligne. Le résultat f2(K) prend alors la forme illustrée par la Figure 12.

Dans ce mode le nombre de coefficients à mémoriser devient :

- 64+16 coefficients pour la transformée T0 ;
- 64+16 coefficients pour la transformée T1 ;
- 0+0 coefficients pour la transformée T2 ;
- 0+0 coefficients pour la transformée T3 ;

Ce qui fait un total de 160 coefficients.

4- quatrième mode de réalisation

Dans ce mode de réalisation, on considère des blocs carrés, par exemple de dimensions 8 par 8 pixels. Bien sûr, d'autres tailles sont envisageables.

On considère les 5 transformations suivantes :

- La transformée $T_0$ est composée d'une DCT de type 2 pour les lignes et les colonnes (de taille respective 8).
- La transformée $T_1$ est composée d'une sous-transformée horizontale $A_{h,1}$=A et d'une sous-transformée verticale $A_{v,1}$=A. A est une sous-transformée noyau de taille 8x8.
- La transformation $T_2$ est composée d'une sous-transformée horizontale $A_{h,2}$=f(A) et d'une sous-transformée verticale $A_{v,2}$=A.
- La transformation $T_3$ est composée d'une sous-transformée horizontale $A_{h,3}$=A et d'une sous-transformée verticale $A_{v,3}$=f(A).
- La transformation $T_4$ est composée d'une sous-transformée horizontale $A_{h,4}$=f(A) et d'une sous-transformée verticale $A_{v,4}$=f(A).

Conformément au premier mode de réalisation f() est une fonction de permutation opérant ligne par ligne.

Dans ce cas, le stockage nécessaire est le suivant :

- 64 coefficients (DCT2) pour la transformée T0 ;
- 64 coefficients (A) pour la transformée T1 ;
- 0 coefficient pour la transformée T3, les deux sous-transformées Av,2 et Ah,2 se déduisant deAv,1 etAh,1 ;
- 0 coefficient pour la transformée T4, les deux sous-transformées Av,3 et Ah,3 se déduisant deAv,1 etAh,1 ;
- 0 coefficient pour la transformée T5, les deux sous-transformées Av,4 et Ah,4 se déduisant deAv,1 etAh,1 ;

Ce qui représente un total de 128 coefficients à stocker, contre 5*(64+64)=640 coefficients pour un stockage exhaustif selon l'art antérieur.

Selon une variante de ce mode de réalisation aussi, on obtient la sous transformée A à partir d'un noyau K de dimensions inférieures, par exemple celui utilisé dans le premier mode de réalisation et qui comprend 3 lignes. Les coefficients à stocker se limitent donc dans ce cas à ceux des 3 lignes du noyau, soit à 24 coefficients. Ainsi au total on ne stocke que 64+24=88 coefficients.

5 - autres alternatives de réalisation de l'invention

D'autres modes de réalisation sont obtenus en combinant les sous-transformées utilisées dans les modes précédents, pour former de nouvelles transformées. Par exemple, on forme une transformée à partir d'une DCT2 horizontale respectivement verticale et d'une sous-transformée égale à A ou déduite de A par un opérateur f vertical respectivement horizontal.

On décrit ici un exemple particulier :

- La transformation $T_0$ est composée d'une DCT de type 2 pour les lignes et les colonnes (de taille respective 8).
- La transformée $T_1$ est composée d'une sous-transformée horizontale $A_{h,1}$ =A et d'une sous-transformation $A_{v,1}$ =A. A est une sous-transformée noyau de taille 8x8.
- La transformée $T_2$ est composée d'une sous-transformée horizontale $A_{h,2}$=f(A) et d'une sous-transformée verticale $A_{v,2}$=A.
- La transformée $T_3$ est composée d'une sous-transformée $A_{h,3}$=DCT2 et d'une seconde sous-transformée $A_{v,3}$=f(A).
- La transformée $T_4$ est composée d'une sous-transformée horizontale $A_{h,4}$=DCT2 et d'une sous-transformée verticale $A_{v,4}$=f(A).

On peut aussi recourir à un nombre plus élevé de transformées. Dans l'exemple ci-dessous, on en compte 8 :

- La transformée $T_0$ est composée d'une sous-transformée horizontale $A_{h,0}$=A et d'une sous-transformée verticale $A_{v,0}$=A.
- La transformée $T_1$ est composée d'une sous-transformée horizontale $A_{h,1}$ =A et d'une sous-transformée verticale $A_{v,1}$=f(A)
- La transformée $T_2$ est composée d'une sous-transformée horizontale $A_{h,2}$=B et d'une sous-transformée verticale $A_{v,2}$=A.
- La transformée $T_3$ est composée d'une sous-transformée horizontale $A_{h,3}$=B et d'une sous-transformée verticale $A_{v,3}$=f(A).
- La transformée $T_4$ est composée d'une sous-transformée horizontale $A_{h,4}$=f(A) et d'une sous-transformée verticale $A_{v,4}$=A.
- La transformée $T_5$ est composée d'une sous-transformée horizontale $A_{h,5}$=f(A) et d'une sous-transformée verticale $A_{v,5}$=f(A).
- La transformée $T_6$ est composée d'une sous-transformée horizontale $A_{h,6}$=f(B) et d'une sous-transformée verticale $A_{v,6}$=A.
- La transformée $T_7$ est composée d'une sous-transformée horizontale $A_{h,7}$=f(B) et d'une sous-transformée verticale $A_{v,7}$=f(A).

On obtient ainsi un système à 8 transformées qui nécessite le stockage de deux sous-transformées (A et B, avec A≠B). Les sous-transformées peuvent s'exprimer, l'une ou l'autre ou les deux, sous forme d'un noyau comme vu précédemment.

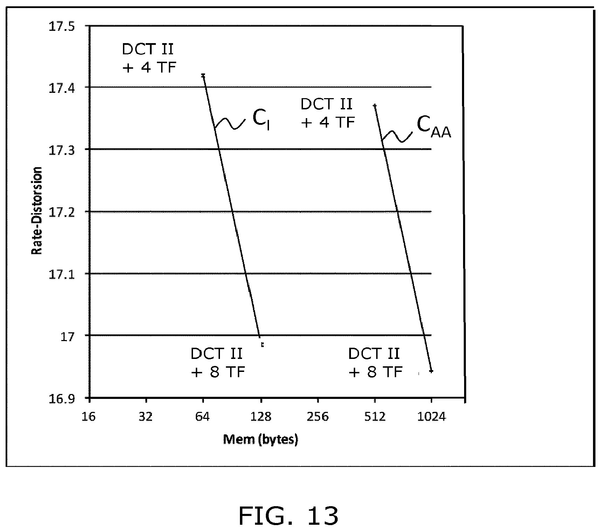

En relation avec la figure 13, on illustre l'impact de l'invention sur les performances de codage dans les conditions des modes de réalisation présentés précédemment dans les sections 4 et 5. Elle présente deux courbes d'une mesure d'un critère débit-distorsion (pour « Rate-Distortion », en anglais) en fonction du nombre de transformées en compétition

(égal à DCT II + 4 ou DCT II +8). Les transformées considérées sont de taille 8x8, et le stockage requis selon l'art antérieur est de 64 coefficients pour chaque direction (horizontale et verticale) et chaque transformée (5 transformations en compétition), ainsi 64*2*4=512 coefficients d'un octet. Selon l'invention, une seule transformation stockée permet d'engendrer 4 transformations (4ème mode de réalisation) cela ne nécessite que 64 coefficients stockés. On voit que la caractéristique avec l'invention utilise notoirement moins de mémoire, tout en préservant le compromis rate-distorsion qui n'est pas augmenté significativement.

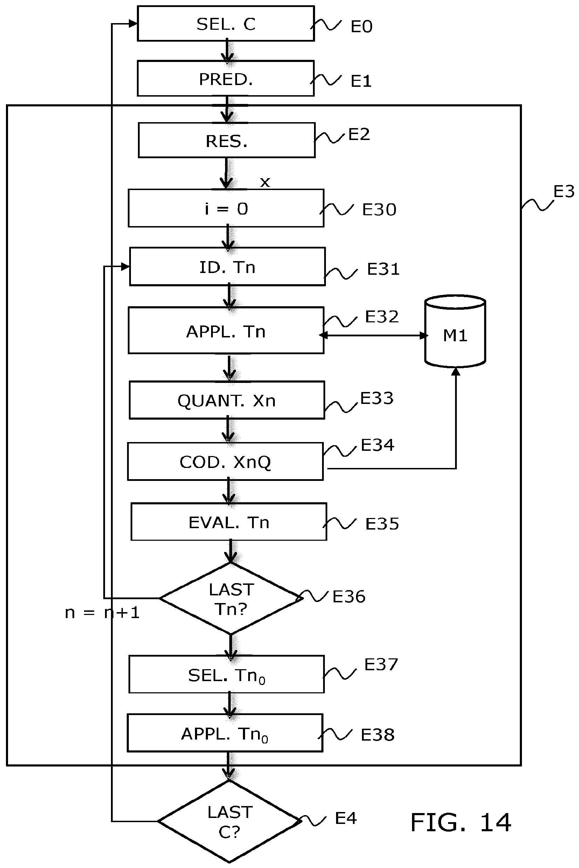

En relation avec la Figure 14 on décrit maintenant un procédé de codage d'une image ou d'une séquence d'images numériques (II) avec I représentant un indice entier compris entre 1 et L non nul, mettant en oeuvre l'invention.

Une image (II) est découpée en blocs rectangulaires $M_h$* $M_v$ ou carrés lorsque $M_h$= $M_v$.

Les blocs rectangulaires peuvent comporter un nombre différent de pixels que celui de l'exemple qui vient d'être décrit, par exemple 2, 4, 8, 16, 32 etc, voire un nombre impair.

En E0, on sélectionne un bloc C à traiter. En E1, on détermine une prédiction P du bloc original C. Il s'agit d'un bloc de prédiction construit par des moyens connus, typiquement par compensation de mouvement (bloc issu d'une image de référence précédemment décodée) dans le cas d'une prédiction dite INTER, ou par prédiction INTRA (bloc construit à partir des pixels décodés immédiatement adjacents au bloc courant dans l'image ID). Les informations de prédiction liées à P sont codées dans le train binaire TB ou fichier compressé FC. On suppose ici qu'il y a J modes de prédiction possibles $MP_1$, $MP_2$,..., $MP_J$, avec J entier non nul, et que le mode de prédiction choisi pour le bloc C est le mode $MP_J$.

Au cours d'une étape E2, un résidu original x est formé, par soustraction x = C-P de la prédiction P du bloc courant C au bloc courant C. Un exemple de bloc résiduel x de dimensions MhxMv d'une image à encoder, est illustré par la Figure 1.

Au cours d'une étape E3, le résidu x est transformé en un bloc résidu transformé, appelé RT, par une transformée. On précise que les étapes E1 et E2 sont optionnelles et que l'étape E3 peut aussi s'appliquer au bloc courant.

Dans un système de compétition de transformées, on a :

- Une pluralité de transformations $T_0$, $T_1$ et $T_2$,..., $T_{N-1}$, avec N entier supérieur ou égal à 2. Dans la suite de la description, on suppose que cette pluralité de transformées est définie selon l'invention, comme précédemment décrit ;
- Ces transformées sont adaptées pour traiter des blocs rectangulaires au sens large (y compris carré donc) d'une taille définie de $M_v$ par $M_h$ pixels, avec Mv, Mh entiers non nuls, avec $M_h$ colonnes et $M_v$ lignes. Par exemple, on a $M_h$=8 et $M_v$=4.

En E30, on initialise l'indice n de transformées à zéro et on identifie la transformée Tn = T0 en E31. En E32, on applique la transformée Tn obtenue au bloc résiduel x et on obtient le bloc transformé Xn. Les coefficients du bloc transformé sont stockés en mémoire.

Selon l'invention, deux cas sont possibles :

- Les coefficients des sous-transformées horizontale et verticale qui composent la transformée Tn sont stockés en mémoire et le codeur y accède directement ; ou
- Les coefficients d'au moins une des sous-transformées horizontale et verticale qui composent la transformée Tn ne sont pas stockés en mémoire, mais sont obtenus à partir de ceux d'une sous-transformée noyau stockés en mémoire. L'application de la sous-transformée est réalisée par un opérateur f prédéterminé qui lit les coefficients de la transformée noyau, les modifie et les applique directement aux éléments du bloc comme précédemment décrit.

Le bloc Xn est ensuite quantifié en E33 de façon classique avec une précision de quantification donnée, appelée par exemple QP (pour « Quantisation Parameter », en anglais) dans la norme HEVC, puis les valeurs quantifiées sont scannées dans un ordre prédéterminés de façon à constituer un vecteur monodimensionnel RQ[i], où l'indice i varie de 0 à $M_v x M_h$-1. L'indice i est appelé fréquence du coefficient RQ[i]. Classiquement, on scanne ces coefficients par ordre croissant de fréquence, par exemple selon un parcours en zigzag, qui est connu de la norme de codage d'image fixes JPEG. Le vecteur obtenu est ensuite codé en E34 sous forme classique à l'aide d'un code binaire de type CABAC tel que décrit dans D. Marpe, H . Schwarz, T. Wiegand, « Context-based adaptive binary arithmetic coding in the H .264/AVC vidéo compression standard » IEEE Transactions on Circuits and Systems for Video Technology (Volume : 13, Issue : 7), pages 620 - 636, July 2003, sous la forme d'un flux de données codées STR.

En E35, on évalue les performances de la transformée T0 sur le bloc résiduel x selon un critère débit-distorsion. Un coût R de codage binaire des coefficients de X0Q est évalué. Une quantification inverse est appliquée au bloc résidu transformé quantifié X0Q, la transformée inverse de T0 lui est appliquée. On évalue les performances de la transformée selon une mesure de type RDO (pour « Rate Distortion Optimisation », en anglais) entre le bloc x' obtenu et le bloc résiduel x d'entrée, par exemple à l'aide d'une mesure de coût Lagrangien J = D + λ x R, où D est la distorsion mesurée sur le bloc x', R le débit généré lors du codage et λ le multiplicateur de Lagrange, dont la valeur est prédéterminé par exemple selon le débit considéré. Ce coût est stocké en mémoire.

En E36, on vérifie s'il reste des transformées à tester. Si n< N, alors on sélectionne la transformée suivante à tester, par exemple T1. Les sous-étapes E31 à E37 sont répétées pour chaque transformée Tn de la pluralité de transformées en compétition.

Une fois que toutes les transformées ont été évaluées, on sélectionne en E38 celle qui a réalisé la meilleure performance. La transformation choisie est indiquée au décodeur sous la forme d'un identifiant, par exemple un indice porté par un code binaire communément porté par un code CABAC. On désigne par $T_{n0}$ la transformée sélectionnée.

En E37, on obtient les coefficients quantifiés codés correspondant à la transformée $T_{n0}$, par exemple par lecture de la mémoire où ils ont été stockés ou bien en appliquant de nouveau la transformée Tn0 au bloc résiduel x et appliquant la quantification pour obtenir $Res_{TQ}$.

A l'issue de l'étape E4, on code pour le bloc courant C un ensemble d'éléments de syntaxe, parmi lesquels on compte les coefficients résidus transformés quantifiés RQ[i], les signes de ces coefficients, le mode de prédiction $MP_k$ etc.

Typiquement on a recours à un codage entropique qui consiste à exploiter la distribution des éléments de syntaxe pour en réduire le débit.

Le train binaire produit STR peut être directement présenté à un décodeur ou bien lui être transmis via un réseau de télécommunications sous forme de flux ou de fichier.

Une fois reçu, il est traité par le décodeur, qui met en oeuvre un procédé de décodage d'une séquence d'images selon l'invention.

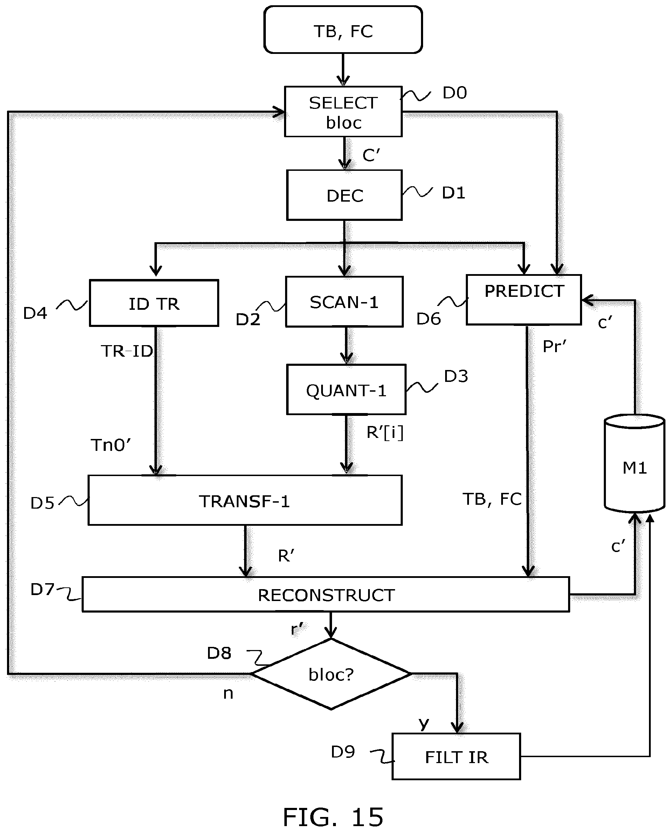

En relation avec la figure 15, on décrit maintenant les étapes d'un procédé de décodage d'un train binaire STR représentatif d'une séquence d'images 11, I2, ..., $I_J$ à décoder, selon l'invention.

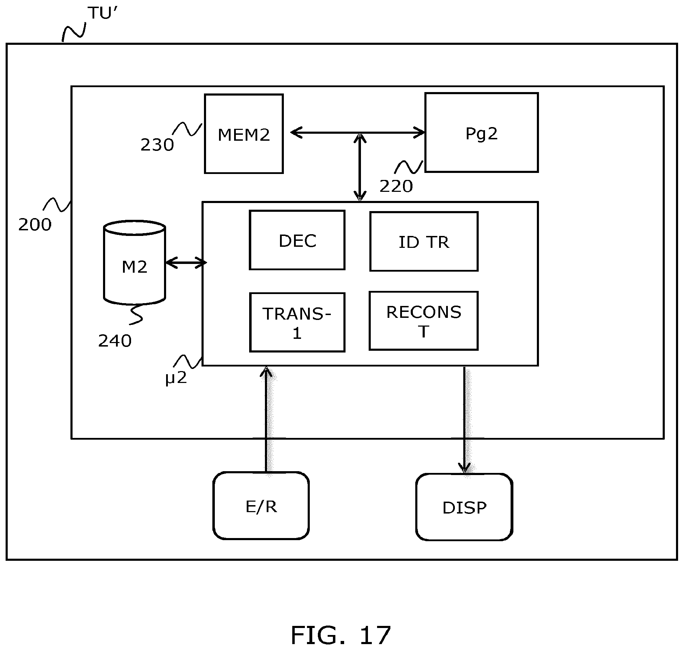

Par exemple, le flux de données STR a été généré via le procédé de codage présenté en relation avec la Figure 14. Le flux de données STR est fourni en entrée d'un dispositif de décodage DEC, qui sera décrit en relation avec la Figure 17.

Le décodage du flux se fait image par image. Pour chaque image à décoder, le procédé de décodage réalise le décodage de l'image bloc par bloc. On considère une image courant le à décoder.

Lors d'une étape D0, on sélectionne un bloc à traiter de l'image courante Ic, dit bloc courant.

En D1, les données du train binaire STR correspondant au bloc $B_c$ sont décodées par décodage entropique pour fournir des éléments de syntaxe relatifs au codage du bloc courant $B_c$. Les éléments de syntaxe décodés comprennent notamment une information de mode de prédiction identifiant pour le bloc courant $B_c$, un mode de prédiction parmi une pluralité de modes de prédiction prédéterminés, un groupe de coefficients quantifiées d'un résidu $Res'_{TQ}$ d'une prédiction de ce bloc courant $B_c$ et un identifiant Tr-ID d'une transformée à appliquer au bloc résidu.

En D2, on parcourt les coefficients selon un ordre inverse de celui appliqué au codeur et on les déquantifie en D3, c'est-à-dire qu'on leur applique un facteur de recadrage (inverse scaling) par exemple selon HEVC. Les valeurs obtenues sont agencées pour former un bloc de coefficients Xc.

En D4, on identifie la transformée Tn0' à appliquer au bloc résidu courant à partir de l'index Tr-ID décodé.

En D5, on obtient la transformée identifiée. Selon l'invention, deux cas sont possibles :

- Les coefficients des sous-transformées horizontale Ah, n0 et verticale Av,n0 qui composent la transformée Tn0' sont stockés en mémoire et le décodeur y accède directement ; ou
- Les coefficients des sous-transformées qui composent la transformée Tn0' sont obtenus par application d'un opérateur f aux coefficients d'une transformée A, B ou d'un noyau K stocké en mémoire, comme précédemment décrit.

En D6, on applique la transformée identifiée en combinaison de sous transformées obtenue comme suit :

$$X_c = A^t_{v,n0}*(A^t_{h,n0} *Xc^t)^t$$

et on obtient le bloc de pixels résidu ou bloc résidu spatial xc.

En D7, le bloc courant est prédit selon le mode de prédiction décodé en D1. La prédiction peut se baser, dans un mode dit inter, sur des images de référence précédemment décodées et reconstruites ($I_{R0}$, $I_{R1}$, ...), ou, dans un mode dit intra, à partir de blocs déjà décodés par exemple dans la même image. Un bloc prédit P' est obtenu.

En D8, le bloc prédit P' est additionné au bloc résidu spatial xc afin d'obtenir le bloc reconstruit local Rec qui peut être filtré pour supprimer les effets de blocs. Il est stocké dans une mémoire M1 afin d'être utilisé pour la prédiction des prochains blocs. Le bloc Rec' reconstruit est ajouté à l'image courante $IC_R$.

Lors d'une étape D9, il est vérifié si tous les blocs de l'image à décoder ont été décodés et reconstruits. Dans le cas négatif, un nouveau bloc courant est identifié en D0 selon un parcours prédéterminé de l'image à décoder et le procédé de décodage reprend à l'étape D1 pour ce bloc.

Dans le cas où tous les blocs de l'image ont été traités, l'image $I_{CR}$ est filtrée en D10 et sauvegardée dans une liste d'images de référence $I1_R$, $I2_R$,... pour être utilisée ultérieurement comme référence lors du décodage des images suivantes de la séquence d'images.

On présente maintenant des performances obtenues par l'invention. On se place pour se faire dans les conditions du quatrième 4$^{ième}$ mode de réalisation.

Pour rappel, selon ce mode, 4 transformées T1, T2, T3 et T4 sont formées à partir d'une même transformée A et sont mises en compétition avec une autre transformée T0 qui est une DCT2 pour les directions verticale et horizontale.

Pour comparer les performances de l'invention à une solution existante, le logiciel de référence de la norme HEVC, a été modifié pour mettre en compétition de 5 transformations conformément à l'art antérieur (dans cet exemple, les transformées 4x4, 8x8, 16x16 et 32x32 pour les blocs carrés) comme présenté dans la publication d'Arrufat citée plus haut.

L'espace de stockage requis pour chacune des solutions est détaillé dans la table 1.

Table 1

| Mv=Mh | Stockage d'une Matrice | Stockage 2 Matrices (H+V) selon l'art antérieur | Pour N=4 transformations N (H+V) selon l'art antérieur | Stockage requis Selon Invention |
|---|---|---|---|---|
| 4 | 16 | 32 | 128 | 16 |
| 8 | 64 | 128 | 512 | 64 |
| 16 | 256 | 512 | 2048 | 256 |
| 32 | 1024 | 2048 | 8192 | 1024 |
| TOTAL | | | 10880 octets | 1360 octets |

Selon l'invention on ne stocke qu'une seule matrice pour chaque taille de bloc. Cela nécessite 1360 octets contre 10880 octets pour l'art antérieur.

Pour apprécier les performances en termes de compression on mesure l'écart en débit entre la solution de l'invention et celle de l'art antérieur. Pour ce faire on code 8 séquences et on apprécie l'écart en débit obtenu pour une qualité identique par exemple selon la métrique BDRate. Ces résultats sont présentés dans la table 2 ci-dessous :

Table 2

| Séquence | Ecart en débit |
|---|---|
| **ClassC-S01** | 0.09% |
| **ClassC-S02** | -0.04% |
| **ClassC-S03** | -0.10% |
| **ClassC-S04** | -0.10% |
| **ClassD-S01** | 0.04% |
| **ClassD-S02** | -0.16% |
| **ClassD-S03** | -0.18% |
| **ClassD-S04** | 0.00% |
| **Moyenne** | **-0.06%** |

On constate qu'une infime perte de débit est à déplorer : en moyenne 0.06% de débit supplémentaire est nécessaire à l'invention. Cette perte en débit est négligeable au vu de l'économie de stockage réalisée (1360 octets contre 10880).

On comprend qu'avec l'invention on réalise un gain en stockage important pour les coefficients des transformées, sans altérer significativement les performances de codage.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

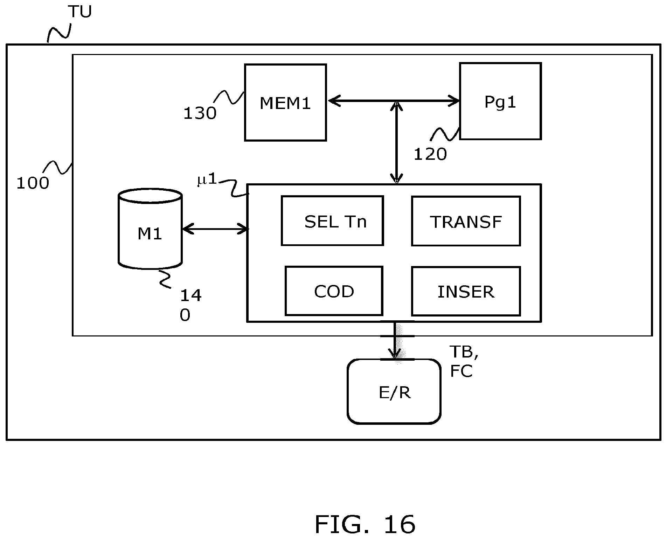

En relation avec la figure **16,** on présente maintenant un exemple de structure simplifiée d'un dispositif 100 de codage d'une image numérique selon l'invention. Le dispositif 100 met en oeuvre le procédé de codage selon l'invention qui vient d'être décrit en relation avec la Figure **14.**

Par exemple, le dispositif 100 comprend une unité de traitement 110, équipée d'un processeur $\mu$1, et pilotée par un programme d'ordinateur Pg1 120, stocké dans une mémoire 130 et mettant en oeuvre le procédé de selon l'invention.

A l'initialisation, les instructions de code du programme d'ordinateur Pg1 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans un premier exemple de réalisation de l'invention, le dispositif 200 comprend une machine de calcul dédiée à ou configurée pour :

- Obtenir une pluralité de transformées, une transformée s'exprimant sous la forme d'une sous-transformée verticale et d'une sous-transformée horizontale ;
- Sélectionner une transformée parmi la pluralité de transformées ;
- Transformer le bloc courant en un bloc transformé, à l'aide de la transformée sélectionnée ;
- Encoder le bloc transformé destiné à produire des données codées représentatives du bloc transformé ;
- Insérer les données codées dans un train binaire représentatif de l'image codée ;

Dans un deuxième exemple de réalisation de l'invention, le dispositif 100 comprend au moins une unité d'obtention d'une pluralité de transformées, une transformée s'exprimant sous la forme d'une sous-transformée verticale et d'une sous-transformée horizontale, une unité de sélection d'une transformée parmi la pluralité de transformées, une unité de transformation du bloc courant en un bloc transformé, à l'aide de la transformée sélectionnée, une unité d'encodage du bloc transformé destiné à produire des données codées représentatives du bloc transformé et une unité d'insertion des données codées dans un train binaire représentatif de l'image codée.

Dans les deux exemples de réalisation, la transformation selon l'invention comprend, pour au moins une transformée de la pluralité de transformées et pour l'application d'au moins une sous- transformée de la transformée sélectionnée :

- la lecture dans une mémoire des coefficients d'au moins une sous-transformée distincte, dite transformée noyau, appartenant à la pluralité de transformées, et
- l'utilisation modifiée des coefficients lus, leurs valeurs absolues étant conservées.

Ces unités sont pilotées par le processeur $\mu$1 de l'unité de traitement 110.

De façon avantageuse, un tel dispositif 100 peut être intégré à un terminal d'utilisateur TU. Le dispositif 100 est alors agencé pour coopérer au moins avec le module suivant du terminal TU :

- un module E/R d'émission/réception de données, par l'intermédiaire duquel le train binaire TB ou le fichier compressé FC est transmis dans un réseau de télécommunications, par exemple un réseau filaire ou un réseau hertzien.

En relation avec la figure **17,** on présente maintenant un exemple de structure simplifiée d'un dispositif 200 de décodage d'une séquence d'images selon l'invention. Le dispositif 200 met en oeuvre le procédé de décodage selon l'invention qui vient d'être décrit dans ses différents modes de réalisation.

Par exemple, le dispositif 200 comprend une unité de traitement 210, équipée d'un processeur $\mu$2, et pilotée par un programme d'ordinateur Pg2 220, stocké dans une mémoire 230 et mettant en oeuvre le procédé de selon l'invention.

A l'initialisation, les instructions de code du programme d'ordinateur $Pg_1$ 220 sont par exemple chargées dans une mémoire RAM avant d'être exécutées par le processeur de l'unité de traitement 210. Le processeur de l'unité de traitement 210 met en oeuvre les étapes du procédé décrit précédemment, selon les instructions du programme d'ordinateur 220.

Dans un premier exemple de réalisation de l'invention, le dispositif 200 comprend une machine de calcul dédiée à ou configurée pour :

- Décoder des coefficients du bloc courant à partir de données codées ;
- Décoder un index représentatif d'un identifiant d'une transformée parmi une pluralité de transformées, une transformée s'exprimant sous la forme d'une sous-transformée verticale de taille MvxMv et d'une sous-transformée horizontale de taille MhxMh ;

- Obtenir la transformée identifiée dans la pluralité de transformées ;
- Transformer les coefficients du bloc courant en un bloc décodé transformé, à partir de la transformée obtenue, par application successive de la sous-transformée verticale puis de la sous-transformée horizontale ou respectivement de la sous-transformée horizontale puis de la sous-transformée verticale ; et
- Reconstruire l'image à partir du bloc décodé transformé.

Dans un deuxième exemple de réalisation de l'invention, le dispositif 200 comprend les unités suivantes :

- Décodage des coefficients du bloc courant à partir de données codées ;
- Décodage d'une information représentative d'un identifiant d'une transformée parmi une pluralité de transformées et identification de la transformée, une transformée s'exprimant sous la forme d'une sous-transformée verticale de taille MvxMv et d'une sous-transformée horizontale de taille MhxMh ;
- Transformation des coefficients du bloc courant en un bloc décodé transformé, à partir de la transformée identifié, par application successive de la sous-transformée verticale puis de la sous-transformée horizontale ou respectivement de la sous-transformée horizontale puis de la sous-transformée verticale ;
- Reconstruction de l'image à partir du bloc décodé transformé ;

Dans les deux exemples de réalisation, la transformation selon l'invention comprend, pour au moins une transformée de la pluralité de transformées et pour l'application d'au moins une sous- transformée de la transformée identifiée :

- la lecture dans une mémoire des coefficients d'au moins une sous-transformée distincte, dite transformée noyau, appartenant à la pluralité de transformées, et
- l'utilisation modifiée des coefficients lus, leurs valeurs absolues étant conservées.

Le dispositif 200 comprend en outre une mémoire ou unité M2 de stockage des coefficients de la au moins une transformée noyau.

De façon avantageuse, le dispositif 200 peut être intégré à un terminal d'utilisateur TU. Il est alors agencé pour coopérer au moins avec les modules suivants du terminal TU :

- un module E/R d'émission/réception de données, par l'intermédiaire duquel le train binaire TB ou le fichier compressé FC est reçu d'un réseau de télécommunications, par exemple un réseau filaire ou un réseau hertzien ;
- un module d'affichage DISP des images décodées.

Grâce à ses bonnes performances, et notamment à l'économie de stockage qu'elle procure, l'invention qui vient d'être décrite dans ses différents modes de réalisation s'applique à tout schéma de compression vidéo par bloc. En particulier, les procédés de codage et de décodage décrits précédemment peuvent être intégrés dans des codeurs/décodeurs vidéo standards tels que H .266, HEVC/H .265, AVC/H.264 ou d'une future norme Post-HEVC, ou encore dans tout type de codeurs/décodeurs vidéo propriétaires. Les procédés de codage et de décodage selon l'invention s'appliquent également à tous types de codeurs/décodeurs d'images fixes.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de décodage d'au moins une image numérique (Ij), à partir de données codées par un encodeur et représentatives de ladite image, ladite image (Ij) étant divisée en une pluralité de blocs traités dans un ordre défini, ledit procédé comprenant les étapes suivantes, mises en oeuvre pour un bloc, dit bloc courant (C), comprenant un nombre prédéterminé Mv de lignes et un nombre prédéterminé Mh de colonnes :

  - Décodage (D1) des coefficients du bloc courant à partir de données codées ;
  - Décodage (D4) d'un index représentatif d'un identifiant d'une transformée parmi une pluralité de transformées et identification de la transformée, une transformée s'exprimant sous la forme d'une sous-transformée verticale de taille Mv*Mv et d'une sous-transformée horizontale de taille Mh*Mh ;
  - Transformation (D6) du bloc courant en un bloc décodé transformé, à partir de la transformée obtenue, par application successive de la sous-transformée verticale puis de la sous-transformée horizontale ou respectivement de la sous-transformée horizontale puis de la sous-transformée verticale ;

- Reconstruction (D8) de l'image à partir du bloc décodé transformé ;

**caractérisé en ce que** l'étape de transformation comprend, pour l'application d'au moins une sous-transformée de la transformée sélectionnée :

- la lecture dans une mémoire des coefficients d'une sous-transformée, dite transformée noyau (K), appartenant à la pluralité de transformées, la transformée noyau (K) comprenant un nombre de lignes Mh', Mv' de coefficients non nuls inférieur au nombre de lignes et/ou au nombre de colonnes du bloc courant ; et
- l'utilisation modifiée, par modification de la position ou du signe, des coefficients lus, leurs valeurs absolues étant conservées, les coefficients lus étant appliqués aux Mh' premières lignes, respectivement Mv' premières colonnes du bloc courant.

2. Procédé selon la revendication 1, **caractérisé en ce que** l'utilisation modifiée des coefficients de la transformée noyau comprend un renversement des lignes de la transformée noyau.

3. Procédé selon la revendication 1 ou 2, **caractérisé en ce que** l'utilisation modifiée des coefficients de la transformée noyau comprend au moins une permutation de deux coefficients et au moins un changement de signe d'un coefficient.

4. Procédé selon la revendication 2 ou 3, **caractérisé en ce que**, le nombre de lignes du bloc courant étant égal au nombre de colonnes Mh=Mv, la pluralité de transformées comprend :

- une première sous transformée verticale Av0 = A de taille Mv*Mv (=Mh*Mh) dont l'application utilise à l'identique les coefficients de la transformée noyau (K) ;
- une deuxième sous-transformée verticale Av1 = D dont l'application utilise les coefficients de la transformée noyau (K) avec renversement de ses lignes ;
- une première sous transformée horizontale Ah0 de taille Mh*Mh(=Mv*Mv) dont l'application utilise à l'identique les coefficients de la transformée noyau (K) ;
- une deuxième sous-transformée horizontale Ah1 = D dont l'application utilise les coefficients de la transformée noyau (K) avec renversement de ses lignes.

5. Dispositif (200) de décodage d'un flux de données codées représentatif d'au moins une image ($I_m$), ladite image étant découpée en blocs, **caractérisé en ce qu'**il comprend une machine de calcul configurée pour ou dédiée à :
Pour un bloc courant, comprenant un nombre prédéterminé Mv de lignes et un nombre prédéterminé Mh de colonnes :

- Décoder des coefficients du bloc courant à partir de données codées ;
- Décoder un index représentatif d'un identifiant d'une transformée et identifier la transformée parmi une pluralité de transformées, une transformée s'exprimant sous la forme d'une sous-transformée verticale de taille Mv*Mv et d'une sous-transformée horizontale de taille Mh*Mh ;
- Transformer le bloc courant en un bloc décodé transformé, à partir de la transformée identifiée, par application successive de la sous-transformée verticale puis de la sous-transformée horizontale ou respectivement de la sous-transformée horizontale puis de la sous-transformée verticale ;
- Reconstruire l'image à partir du bloc décodé transformé ;

**caractérisé en ce que** la transformation du bloc courant comprend, pour au moins une transformée de la pluralité de transformées et pour l'application d'au moins une sous-transformée de la transformée sélectionnée :

- la lecture dans une mémoire des coefficients d'au moins une sous-transformée, dite transformée noyau (K), appartenant à la pluralité de transformées, la transformée noyau (K) comprenant un nombre de lignes Mh', Mv' de coefficients non nuls inférieur au nombre de lignes et/ou au nombre de colonnes du bloc courant ; et
- l'utilisation modifiée, par modification de la position ou du signe, des coefficients lus, leurs valeurs absolues étant conservées, les coefficients lus étant appliqués aux Mh', respectivement Mv', premières lignes du bloc courant.

6. Equipement terminal d'utilisateur (TU, TU') **caractérisé en ce qu'**il comprend un dispositif de décodage (200) d'au moins une image numérique selon la revendication 5.

7. Programme d'ordinateur (Pg1,Pg2) comprenant des instructions pour la mise en oeuvre du procédé selon l'une des revendications 1 à 4, lorsqu'il est exécuté par un processeur.

**8.** Support d'enregistrement lisible par un ordinateur, sur lequel est enregistré un programme d'ordinateur comprenant des instructions de code de programme pour l'exécution des étapes du procédé selon l'une des revendications 1 à 4.

FIG. 1

FIG.2A

FIG. 2B

$L_n^t$      $A_{h,n}$        Mh        $I^t$

| L0 |
| L1 |
| L2 |
| L3 |
| L4 |
| L5 |
| L6 |
| L7 |

=    Mh

| 0,0 | 0,1 | 0,2 | 0,3 | 0,4 | 0,5 | 0,6 | 0,7 |
|-----|-----|-----|-----|-----|-----|-----|-----|
| 1,0 | 1,1 | 1,2 | 1,3 | 1,4 | 1,5 | 1,6 | 1,7 |
| 2,0 | 2,1 | 2,2 | 2,3 | 2,4 | 2,5 | 2,6 | 2,7 |
| 3,0 | 3,1 | 3,2 | 3,3 | 3,4 | 3,5 | 3,6 | 3,7 |
| 4,0 | 4,1 | 4,2 | 4,3 | 4,4 | 4,5 | 4,6 | 4,7 |
| 5,0 | 5,1 | 5,2 | 5,3 | 5,4 | 5,5 | 5,6 | 5,7 |
| 6,0 | 6,1 | 6,2 | 6,3 | 6,4 | 6,5 | 6,6 | 6,7 |
| 7,0 | 7,1 | 7,2 | 3,3 | 7,4 | 7,5 | 7,6 | 7,7 |

*

| I0 |
| I1 |
| I2 |
| I3 |
| I4 |
| I5 |
| I6 |
| I7 |

## FIG. 3

A        Mh

Mh     M'h

K

O

## FIG. 4

A

Mh

| 0,0 | 0,1 | 0,2 | 0,3 | 0,4 | 0,5 | 0,6 | 0,7 |
| 1,0 | 1,1 | 1,2 | 1,3 | 1,4 | 1,5 | 1,6 | 1,7 |
| 2,0 | 2,1 | 2,2 | 2,3 | 2,4 | 2,5 | 2,6 | 2,7 |
| 3,0 | 3,1 | 3,2 | 3,3 | 3,4 | 3,5 | 3,6 | 3,7 |
| 4,0 | 4,1 | 4,2 | 4,3 | 4,4 | 4,5 | 4,6 | 4,7 |
| 5,0 | 5,1 | 5,2 | 5,3 | 5,4 | 5,5 | 5,6 | 5,7 |
| 6,0 | 6,1 | 6,2 | 6,3 | 6,4 | 6,5 | 6,6 | 6,7 |
| 7,0 | 7,1 | 7,2 | 3,3 | 7,4 | 7,5 | 7,6 | 7,7 |

Mh

d(A)

Mh

| 0,7 | 0,6 | 0,5 | 0,4 | 0,3 | 0,2 | 0,1 | 0,0 |
| 1,7 | 1,6 | 1,5 | 1,4 | 1,3 | 1,2 | 1,1 | 1,0 |
| 2,7 | 2,6 | 2,5 | 2,4 | 2,3 | 2,2 | 2,1 | 2,0 |
| 3,7 | 3,6 | 3,5 | 3,4 | 3,3 | 3,2 | 3,1 | 3,0 |
| 4,7 | 4,6 | 4,5 | 4,4 | 4,3 | 4,2 | 4,1 | 4,0 |
| 5,7 | 5,6 | 5,5 | 5,4 | 5,3 | 5,2 | 5,1 | 5,0 |
| 6,7 | 6,6 | 6,5 | 6,4 | 6,3 | 6,2 | 6,1 | 6,0 |
| 7,7 | 7,6 | 7,5 | 3,4 | 7,3 | 7,2 | 7,1 | 7,0 |

Mh

# FIG. 5

$L_n^t$

| L0 |
| L1 |
| L2 |
| 0 |

=

$A_{h,n}$

Mh

M'h

Mh

| 0,0 | 0,1 | 0,2 | 0,3 | 0,4 | 0,5 | 0,6 | 0,7 |
| 1,0 | 1,1 | 1,2 | 1,3 | 1,4 | 1,5 | 1,6 | 1,7 |
| 2,0 | 2,1 | 2,2 | 2,3 | 2,4 | 2,5 | 2,6 | 2,7 |

0

*

$I^t$

| I0 |
| I1 |
| I2 |
| I3 |
| I4 |
| I5 |
| I6 |
| I7 |

# FIG. 6

M' / M / A

| 59 | 62 | 57 | 50 | 42 | 32 | 22 | 13 |
|---|---|---|---|---|---|---|---|
| 59 | 44 | 11 | -24 | -50 | -60 | -54 | -35 |
| 55 | 13 | -41 | -61 | -32 | 23 | 58 | 53 |
| 51 | -21 | -62 | -9 | 56 | 42 | -28 | -61 |
| 43 | -48 | -32 | 55 | 22 | -60 | -16 | 62 |
| 34 | -61 | 23 | 42 | -59 | 9 | 54 | -52 |
| 24 | -55 | 59 | -32 | -13 | 52 | -64 | 38 |
| 13 | -33 | 50 | -61 | 62 | -55 | 41 | -19 |

## FIG. 7

D = f(A)

| 35 | 54 | 60 | 50 | 24 | -11 | -44 | -59 |
|---|---|---|---|---|---|---|---|
| -53 | -58 | -23 | 32 | 61 | 41 | -13 | -55 |
| -61 | -28 | 42 | 56 | -9 | -62 | -21 | 51 |
| -62 | 16 | 60 | -22 | -55 | 32 | 48 | -43 |
| -52 | 54 | 9 | -59 | 42 | 23 | -61 | 34 |
| -38 | 64 | -52 | 13 | 32 | -59 | 55 | -24 |
| 19 | -41 | 55 | -62 | 61 | -50 | 33 | -13 |

## FIG. 8

K

M'

| 59 | 62 | 57 | 50 | 42 | 32 | 22 | 13 |
|---|---|---|---|---|---|---|---|
| 59 | 44 | 11 | -24 | -50 | -60 | -54 | -35 |
| 55 | 13 | -41 | -61 | -32 | 23 | 58 | 53 |

## FIG. 9

K2

| 59 | 57 | 42 | 22 |
|----|----|----|----|
| 55 | -41 | -32 | 58 |
| 0 | 0 | 0 | 0 |
| 0 | 0 | 0 | 0 |

**FIG. 10**

B

| 13 | 22 | 32 | 42 | 50 | 57 | 62 | 59 |
|----|----|----|----|----|----|----|----|
| -35 | -54 | -60 | -50 | -24 | 11 | 44 | 59 |
| 53 | 58 | 23 | -32 | -61 | -41 | 13 | 55 |

f1(K)

**FIG. 11**

| 13 | 22 | 32 | 42 | 50 | 57 | 62 | 59 |
|----|----|----|----|----|----|----|----|
| 35 | 54 | 60 | 50 | 24 | -11 | -44 | -59 |
| 53 | 58 | 23 | -32 | -61 | -41 | 13 | 55 |

f2(K)

**FIG. 12**

FIG. 13

FIG. 14

FIG. 15

FIG. 16

TU'

200

230    MEM2    ⟷    Pg2
                           220

M2

DEC        ID TR

TRANS-1    RECONST

240

μ2

E/R        DISP

# FIG. 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. ARRUFAT et al.** Rate-distortion optimised transform compétition for intra coding in HEVC. *Proceedings de la conférence IEEE Visual Communication on Image Processing,* Décembre 2014, 73

- **D. MARPE ; H . SCHWARZ ; T. WIEGAND.** Context-based adaptive binary arithmetic coding in the H .264/AVC vidéo compression standard. *IEEE Transactions on Circuits and Systems for Video Technology,* Juillet 2003, vol. 13 (7), 620-636